# FASCICULE DE BREVET EUROPEEN

(11) **EP 1 469 660 B1**
(45) Date de publication et mention de la délivrance du brevet: **31.05.2017**
(21) Numéro de dépôt: 04291018.2
(22) Date de dépôt: 16.04.2004
(51) Int. Cl.: H04M 3/42, H04L 29/06, H04M 7/00, H04M 3/54

(54) **Procédé pour contrôler l'établissement de communications entre terminaux choisis par un utilisateur**
Verfahren zur Steuerung eines Verbindungsaufbaus zwischen benutzerdefinierten Endgeräten
Method for controlling communication setup between user selected terminals

(30) Priorité: 18.04.2003 FR 0304853
(43) Date de publication de la demande: 20.10.2004
(73) Titulaire: ALCATEL LUCENT, 92100 Boulogne-Billancourt (FR)
(72) Inventeur: Le Creff, Michel, 95450 Vigny (FR); Gass, Raymond, 67150 Bolsenheim (FR)
(74) Mandataire: Berthier, Karine

(56) Documents cités:
- EP-A- 1 093 281
- EP-A- 1 117 263
- WO-A-02/076072
- US-A1- 2002 187 777
- HENNING SCHULZRINNE: "SIP: Call Setup and Beyond" ERICSSON SIGNALING DAYS 2000, [Online] 14 novembre 2000 (2000-11-14), XP002265502 Kalrlstad, Sweden Extrait de l'Internet: URL:http://www.cs.columbia.edu/~hgs/papers /2000/signaling.pdf> [extrait le 2003-12-17]
- VINOD K. BHAT: "Voice Over IP - The SIP Way" TECHNOLOGY REVIEW#2001-03 / TATA CONSULTANCY SERVICES, [Online] avril 2001 (2001-04), XP002265503 Extrait de l'Internet: URL:http://www.tcs.com/0_whitepapers/htdoc s/VoiceOverIP-TheSIPway.pdf> [extrait le 2003-12-17]

## Description

L'invention concerne l'échange de données entre terminaux de communication au sein de réseaux de communications, et plus particulièrement l'établissement de communications entre des terminaux d'utilisateurs.

En matière de téléphonie, le souhait ultime des appelants est de pouvoir joindre des appelés le plus rapidement possible, indépendamment de leurs positions respectives et de leurs terminaux de communications respectifs. Or, en raison, d'une part, de la coexistence de terminaux de types différents, offrant des services de types différents (comme par exemple la téléphonie fixe ou mobile, la téléphonie par Internet, la transmission de données de texte, de voix, d'images fixes ou animées, ou de données multimédia) et généralement raccordés à des réseaux de types différents, et d'autre part, de la mobilité accrue des personnes, l'établissement d'une communication entre un appelant et un appelé peut s'avérer complexe et fastidieuse.

En cas de tentative infructueuse, l'appelant peut être contraint de manipuler des répertoires et/ou d'établir une ou plusieurs communications pour déterminer l'adresse de communication du terminal grâce auquel il est susceptible de joindre l'appelé. Cela peut également contraindre l'appelant à utiliser un autre type de terminal que celui initialement utilisé. En outre, une fois la liaison établie entre un terminal d'appelant et un terminal d'appelé, il n'est pas garanti que l'appelant puisse transmettre ses données à l'appelé, notamment lorsque leurs terminaux respectifs offrent des services de types différents.

Pour tenter d'améliorer la situation, il a été proposé d'améliorer les dispositifs de contrôle d'appels (ou « call control ») en leur permettant de transférer un appel vers une autre adresse de communication ou vers un service de messagerie, ou bien de rappeler automatiquement l'appelant lorsque l'appelé est en ligne. Cependant, ces dispositifs ne prennent pas réellement en considération l'appelant et ne sont pas adaptés à la gestion de la mobilité et/ou de la diversité des types de terminaux de communication.

On connaît le protocole SIP (Session Initiation Protocol, IETF RFC 2543) décrit par exemple dans l'article de Jonathan D. Rosenberg et al, The Session Initiation Protocol (SIP) A Key Component for Internet Telephony, dans Computer Telephony, June 2000, volume 8, issue 6, page 126.

SIP permet d'initier des sessions de communication interactive entre des utilisateurs ; et il permet aussi de terminer ou de modifier une session. Initier une session implique de déterminer où est réellement l'utilisateur à contacter, à un moment donné. Un utilisateur peut avoir plusieurs terminaux téléphoniques situés dans des lieux différents, par exemple, un ordinateur personnel sur son lieu de travail, un ordinateur personnel à la maison, et un téléphone Internet dans son laboratoire. Un appel vers cet utilisateur peut donc nécessiter de faire sonner tous ces terminaux à la fois. En outre cet utilisateur peut être mobile. Pour trouver cet utilisateur, SIP prend en compte une information de localisation dynamique.

Une fois que l'utilisateur appelé a été localisé, SIP fournit une description de la session à laquelle l'utilisateur appelé est invité. Pour cela il peut utiliser des protocoles connus : MIME (Multipurpose Internet Mail Extension) ou SDP (Session Description Protocol). SIP fournit en retour, à l'utilisateur appelant, une réponse d'acceptation, de rejet, etc.

Une application appelée agent de l'utilisateur agit au nom d'un utilisateur. Elle peut agir à la fois comme client (User agent Client), et comme serveur (User agent Server) respectivement quand cet utilisateur émet un message d'invitation à une cession, ou reçoit un message d'invitation, et répond. Cette application peut être utilisée par deux terminaux sans serveur intermédiaire, mais ce n'est pas le cas en général. Sur le chemin de signalisation, intervient généralement un serveur mandataire (appelé aussi serveur proxy) situé à proximité de l'utilisateur appelant et un serveur mandataire situé à proximité de l'utilisateur appelé, plus éventuellement un serveur dit de re-direction.

L'utilisateur appelant utilise son logiciel client pour initier une session. Ce logiciel (User Agent Client, ou UAC) envoie une requête (appelée INVITE) adressée à un serveur mandataire situé dans une entité à proximité de l'appelant. Le protocole SIP utilise des adresses de localisation universelles appelées URL (Universal ressource Locator) très semblables aux adresses utilisée pour le courrier électronique. Par exemple, si l'adresse de courrier électronique de l'utilisateur appelant est jdrosen@dynamicsoft.com, son adresse SIP est :
sip : jdrosen@dynamicsoft.com

Par exemple, si cet utilisateur jdrosen veut appeler l'utilisateur joe@columbia.edu, le terminal de jdrosen envoie un message INVITE au serveur mandataire qui gère le domaine d'adresses dynamicsoft.com. Ce serveur retransmet ce message à un serveur de re-direction, qui gère le domaine d'adresses columbia.edu. Un serveur de re-direction n'est pas un serveur mandataire : Au lieu de retransmettre le message, ce serveur demande au serveur qui a envoyé ce message, de contacter plutôt un serveur mandataire qu'il désigne, après avoir consulté une base de données. Par exemple, cette base de données indique qu'aujourd'hui Joe est dans le domaine foo.com. Le serveur de re-direction envoie donc au serveur mandataire du domaine dynamicsoft.com un message de re-direction lui demandant de re-essayer en contactant joe@foo.com. Le serveur mandataire du domaine dynamicsoft.com envoie un nouveau message INVITE au serveur mandataire du domaine foo.com. Ce dernier consulte sa base de données et sait alors que Joe est dans le service commercial (« sales department» en Anglais) il crée une nouvelle adresse : joe@sales.foo.com, et envoie un message INVITE au serveur mandataire du domaine sales.foo.com. Le serveur mandataire du service commercial doit alors retransmettre ce message vers l'ordinateur individuel actuellement utilisé par Joe.

Lorsque Joe a allumé son ordinateur, du service commercial, un logiciel client exécuté sur cet ordinateur a créé un lien entre les adresses :
sip : joe@sales.engineering.com et sip : joe@mypc.sales.foo.com,
en envoyant un message REGISTER au serveur mandataire du domaine sales.foo.com. Ce lien est mémorisé, mais est périodiquement rafraîchi.

Dans cet exemple d'initiation de cession, le serveur mandataire du domaine sales.foo.com consulte sa base de données de localisation, qui lui indique l'adresse sip : joe@mypc.sales.foo.com, puis il retransmet le message INVITE à joe@mypc.sales.foo.com. Le message arrive ainsi sur l'ordinateur de Joe.

Joe répond, par une commande manuelle, qu'il accepte l'invitation à la session , ou bien qu'il refuse, ou bien qu'il est occupé, ou bien qu'il renvoit le message vers une autre adresse. Le message de réponse passe par les mêmes serveurs mandataires que le message INVITE, mais en sens inverse, jusqu'au terminal de l'utilisateur appelant. Ce dernier répond par un accusé de réception, et la session est alors établie. La communication vocale est alors établie directement entre les deux terminaux indépendamment de SIP, par exemple en utilisant le protocole RTP (Real time Transport Protocol).

La demande de brevet US 2002/0187777 décrit l'utilisation du protocole SIP pour permettre à un utilisateur de renvoyer au coup par coup les communications qui lui sont destinées, vers un terminal choisi parmi plusieurs terminaux dont il dispose, dans un même lieu ou dans des lieux différents. Par exemple, un utilisateur professionnel qui est en déplacement dans une entreprise extérieure à celle qui l'emploie, et qui reçoit une notification de demande de communication sur son assistant numérique personnel, pendant qu'il est dans le bureau d'une autre personne dans cette entreprise extérieure, peut demander que la communication soit établie avec le poste téléphonique de cette autre personne.

L'assistant numérique est associé à un premier serveur mandataire, et à agent utilisateur SIP (SIP user agent dans la terminologie SIP), reliés à un même réseau utilisant le protocole Internet. Quand un utilisateur appelant souhaite établir une communication, un message textuel, fixé par la norme SIP, « INVITE », arrive au premier serveur mandataire. Ce dernier va lire une liste de numéros où l'utilisateur appelé préfère être appelé, et il sélectionne le premier numéro de cette liste. L'agent utilisateur convertit ce message SIP en un autre message plus riche et plus adapté à un assistant numérique, pour notifier l'invitation à une communication. Cet autre signal peut être conforme à l'un des protocoles HTTP, WAP ; ou à l'un des langages HTML, XML, VOXML, Par exemple, l'assistant numérique reçoit la notification sous la forme d'une page web en langage HTML.

Si l'utilisateur appelé veut établir une communication, mais sur un autre terminal, il envoie un ordre de renvoi et un numéro de téléphone de renvoi (ou une adresse Internet), de son assistant numérique au premier serveur mandataire. Ces informations sont transportées à l'intérieur d'un fichier qui est aussi une page web en langage HTML, dans cet exemple. Elles sont converties par l'agent utilisateur en un message SIP fixé, « REDIRECT », qui contient le numéro de renvoi. Ce message SIP est envoyé à un second serveur mandataire SIP auquel est rattaché logiquement un second terminal désigné par le numéro de renvoi. Le second serveur mandataire SIP envoie un signal SIP « INVITE » à destination de ce second terminal. Ce signal SIP est transmis sans autre conversion jusqu'au second terminal si celui-ci est de type SIP.

Ces procédés connus ont un inconvénient : Ils donnent beaucoup de possibilités à l'utilisateur appelé mais peu de possibilités à l'utilisateur appelant. Un utilisateur appelant ne connaît pas les terminaux dont dispose l'utilisateur appelé. Il ne connaît pas non plus les préférences de l'utilisateur appelé. Par conséquent, au moment où l'utilisateur appelant veut établir une communication, il ne peut pas choisir un mode de communication en fonction des terminaux dont dispose l'utilisateur appelé, ni en fonction des préférences de ce dernier. Il ne peut choisir qu'en fonction de ses propres terminaux, et de ses propres préférences. D'autre part, il est souhaitable que ce choix soit réalisé automatiquement par un équipement au service de l'utilisateur appelant.

L'invention a donc pour but de permettre à un équipement de télécommunication, au service de l'utilisateur appelant, de choisir un terminal de l'utilisateur appelé (par exemple parmi un téléphone fixe, un téléphone mobile, un ordinateur, un assistant personnel numérique, etc ...) et de choisir un mode de communication (voix seule, ou voix et vidéo, ou e-mail, ou « chat », etc ...), en tenant compte d'informations plus riches que celles disponibles classiquement du côté de l'utilisateur appelant. Ces informations ne doivent pas être limitées au type de terminal et au mode de communication, l'utilisateur appelant souhaiterait souvent que le terminal et le mode de communication soient sélectionnés en outre en fonction d'informations propres à l'utilisateur appelé, par exemple sa disponibilité, sa localisation, etc...

Un premier objet de l'invention est un procédé d'établissement de communications entre des utilisateurs dits appelant et appelé, associés chacun à au moins un identifiant personnel, et disposant chacun d'au moins un terminal de communication, chaque terminal de communication de l'utilisateur appelant étant relié logiquement à un premier équipement de communication et chaque terminal de communication de l'utilisateur appelé étant relié logiquement à un second équipement de communication, et l'ensemble de ces terminaux permettant une pluralité de modes de communication entre ces deux utilisateurs ;
ce procédé consistant, en cas de demande d'établissement d'une communication entre un utilisateur appelant et un utilisateur appelé, à échanger des informations entre le premier équipement de communication et le second équipement de communication, préalablement à l'établissement d'une communication,
et étant caractérisé en ce que, si l'utilisateur appelé accepte l'établissement d'une communication :
- le second équipement de communication détermine chaque terminal, de l'utilisateur appelé, qui permettraient d'établir la communication demandée ;
- puis le second équipement de communication envoie au premier équipement de communication un identifiant de terminal pour chaque terminal ainsi déterminé ;
- et le premier équipement de communication sélectionne alors, parmi les identifiants qu'il reçoit, au moins un identifiant de terminal de l'utilisateur appelé, s'il y a une pluralité de choix possibles ; et initie ensuite l'établissement d'une communication entre au moins un terminal de l'utilisateur appelant, et au moins un terminal, de l'utilisateur appelé, correspondant à un identifiant qu'il a sélectionné.

Le procédé ainsi caractérisé permet à un équipement, lorsqu'il est au service d'un utilisateur appelant, de choisir un terminal à appeler parmi une pluralité de terminaux dont dispose l'utilisateur appelé, parce qu'il consiste à envoyer à cet équipement un identifiant de terminal pour chaque terminal permettant de joindre l'utilisateur appelé. L'équipement au service de l'utilisateur appelant sélectionne alors, parmi les identifiants qu'il reçoit, au moins un identifiant de terminal de l'utilisateur appelé, s'il y a une pluralité de choix possibles.

Selon un mode de mise en oeuvre particulier, le procédé selon l'invention est caractérisé en ce que, pour chaque terminal qu'il a déterminé, le second équipement de communication détermine en outre chaque mode de communication de ce terminal, qui permettraient d'établir la communication demandée ;
puis le second équipement de communication envoie en outre au premier équipement de communication un identifiant de mode de communication pour chaque mode ainsi déterminé ;
et le premier équipement de communication sélectionne alors, parmi les identifiants qu'il reçoit, au moins un identifiant de terminal de l'utilisateur appelé, et au moins un identifiant de mode de communication, s'il y a une pluralité de choix possibles.

Le procédé ainsi caractérisé permet à un équipement, lorsqu'il est au service d'un utilisateur appelant, de choisir un mode de communication, en plus de choisir un terminal à appeler, s'il y a plusieurs possibilités.

Un second objet de l'invention est un équipement de communication pour la gestion de l'établissement de communications entre des utilisateurs dits appelant et appelé, associés chacun à au moins un identifiant et disposant chacun d'au moins un terminal de communication ; cet équipement étant rattaché logiquement à chaque terminal de communication d'au moins un utilisateur, et comportant des moyens pour échanger des informations avec un second équipement de communication analogue au premier, préalablement à l'établissement d'une communication entre un terminal rattaché logiquement à ce premier équipement et un autre terminal rattaché logiquement à ce second équipement ;
cet équipement étant caractérisé en ce que les moyens pour échanger des informations avec un second équipement de communication analogue au premier, comportent :
- des moyens pour recevoir un identifiant de terminal pour chaque terminal d'un utilisateur appelé, qui permettraient d'établir la communication demandée ;
- et des moyens pour sélectionner alors, parmi les identifiants qu'il reçoit, au moins un identifiant de terminal de l'utilisateur appelé, s'il y a une pluralité de choix possibles ; et initier ensuite l'établissement d'une communication entre au moins un terminal de l'utilisateur appelant, et au moins un terminal, de l'utilisateur appelé, correspondant à un identifiant sélectionné.

Selon un mode de réalisation particulier, les moyens pour échanger des informations avec un second équipement de communication analogue au premier, comportent en outre :
- des moyens pour recevoir au moins un identifiant de mode de communication pour chaque terminal déterminé par le second équipement de télécommunication ;
- et des moyens pour sélectionner, parmi les identifiants qu'il reçoit, au moins un identifiant de terminal de l'utilisateur appelé, et au moins un identifiant de mode de communication, s'il y a une pluralité de choix possibles.

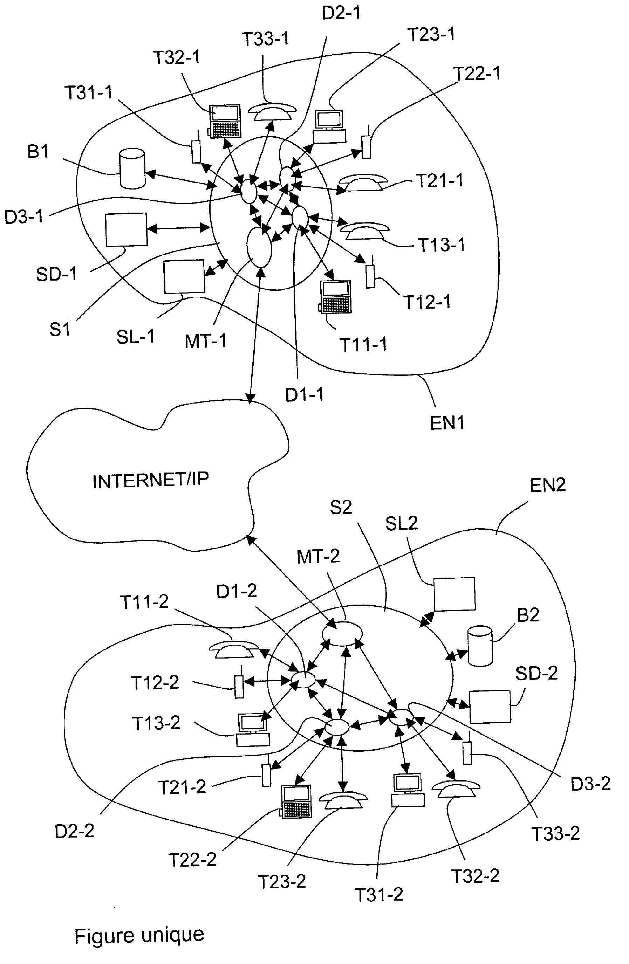

D'autres caractéristiques et avantages de l'invention apparaîtront à l'examen de la description détaillée ci-après, et du dessin annexé, sur lequel l'unique figure illustre de façon schématique un exemple d'installation de communications équipée d'équipements de communication selon l'invention. Ce dessin pourra non seulement servir à compléter l'invention, mais aussi contribuer à sa définition, le cas échéant.

Dans l'exemple illustré sur l'unique **figure,** on a représenté une installation de communications comportant trois réseaux de communications, de types différents, raccordés entre eux par des équipements de communication S1 et S2. Plus précisément, dans cet exemple l'installation comporte tout d'abord deux sous-réseaux EN1 et EN2, privés, appartenant par exemple à un groupe d'entreprises (ou compagnie) et couplés à un réseau public de données, par exemple de type Internet/IP, par l'intermédiaire d'équipements de communication S1 et S2.

Ces équipements de communication S1 et S2 sont par exemple des équipements ayant, de préférence, la fonction de serveur mandataire (appelé aussi proxy)..

Les sous-réseaux privés EN1 et EN2 sont, par exemple, de type PABX (pour « Private Automatic Branch Exchange »), éventuellement sans fil (s'ils utilisent la norme DECT). Mais, il pourrait également s'agir de réseaux de type WLAN (pour « Wireless Local Access Network »).

Bien que cela ne soit pas représenté, les sous-réseaux privés EN1 et EN2 et le réseau de données IP, sont également raccordés par des serveurs d'accès à un ou plusieurs réseaux publics de téléphonie RTP, par exemple de type PLMN (pour « Public Land Mobile Network »), tels que les réseaux GSM, GPRS, UMTS et i-Mode, ou de type commuté (par exemple RTC pour « Réseau Téléphonique Commuté » ou PSTN pour « Public Switched Telephony Network »).

Bien entendu, l'invention est ni limitée à cet exemple de combinaison de (sous-)réseaux privés (EN), de réseau public de téléphonie et de réseau public de données (Internet/IP), ni au nombre de réseaux choisi. On pourrait ainsi faire coexister plusieurs réseaux privés, plusieurs réseaux publics de données et plusieurs réseaux publics de téléphonie (par exemple de type PSTN (ou RTC), PLMN (et notamment GSM, GPRS, UMTS ou i-Mode)).

Une multiplicité de terminaux de communications d'utilisateurs Tjj-k peuvent se raccorder, si ils y sont autorisés, soit à un sous-réseau privé ENk et/ou au réseau de téléphonie, soit indirectement au réseau Internet/IP via l'un des sous-réseaux privés ENk et un réseau de téléphonie, soit encore indirectement à l'un des sous-réseaux privés ENk via le réseau de téléphonie et le réseau Internet/IP.

Dans l'exemple illustré, chaque utilisateur Uj-k dispose de trois terminaux de communications Tji-k (un téléphone mobile, un téléphone fixe et un ordinateur individuel fixe (ou PC) ou un ordinateur portable). L'indice i désigne le numéro du terminal, l'indice j désigne l'utilisateur Uj-k du terminal et l'indice k désigne le sous-réseau EN1, EN2 auquel est rattaché l'utilisateur Uj-k. Par conséquent, dans l'exemple illustré, k vaut 1 ou 2, j vaut 1, 2 ou 3, et i vaut 1, 2 ou 3. Mais, bien entendu, ces indices pourraient prendre des valeurs différentes. Ainsi, certains utilisateurs peuvent disposer d'un terminal ou de deux ou quatre terminaux de communication, voire plus. De même, le nombre d'utilisateur peut prendre n'importe quelle valeur. En outre, l'invention n'est pas limitée aux seuls terminaux de type téléphone mobile et ordinateur fixe ou portable. D'une manière générale, elle concerne tout type de terminal de communication capable d'échanger des données avec un autre terminal, et notamment les téléphones fixes, les assistants personnels numériques (ou PDA pour « Personal Digital Assistant ») et les télécopieurs (ou faxs).

Par ailleurs, les terminaux de type ordinateur fixe ou portables sont préférentiellement raccordés à l'un des sous-réseaux privés ENk par l'intermédiaire d'un moyen de connexion, ou liaison réseau, de préférence à haut débit, comme par exemple une liaison Ethernet commutée. Mais, tout autre type de liaison réseau peut être envisagé, et notamment les liaisons analogiques, ADSL, 2B+D, 30B+D, radio, WLAN et Bluetooth.

Chaque utilisateur Uj-k est désigné par un premier identifiant, comme par exemple un nom ou un titre (par exemple « directeur marketing »). Des premiers identifiants de types différents peuvent coexister. Par ailleurs, chaque utilisateur Uj-k est associé à un dispositif de traitement de données Dj-k, également appelé « assistant ». Bien entendu, un assistant D peut être associé à plusieurs utilisateurs différents. Par ailleurs, on peut également envisager qu'un des utilisateurs ne dispose pas d'un assistant, l'invention s'appliquant dès lors qu'au moins un utilisateur appelant ou appelé dispose d'un assistant.

Dans l'exemple illustré sur l'unique figure, tous les assistants (ou dispositifs) Dj-k, des utilisateurs Uj-k rattachés à un sous-réseau privé ENk, sont implantés dans l'équipement de communication Sk, qui sert ici de proxy.

Préférentiellement, chaque assistant (ou dispositif) Dj-k dispose d'une fonctionnalité proxy (telle que définie par les standards IETF RFC 2871 et RFC ON 2543). Par ailleurs, chaque assistant Dj-k dispose préférentiellement d'une mémoire (non représentée) stockant les identifiants de communication (par exemple des numéros de téléphone ou des adresses internet) des terminaux de communication Tji-k qui lui sont associés.

Chaque équipement de communication Sk, selon l'invention, est dédié à la gestion de l'établissement de communications entre des utilisateurs appelant et appelé, appartenant au même sous-réseau privé ENk ou à des sous-réseaux privés différents. Il est associé à un identifiant de communication au sein du réseau de communication qui lui permet d'être lié à un autre équipement de communication Sk'. Ici, le réseau de communication étant un réseau de type internet/IP, l'identifiant de communication d'un équipement Sk est par exemple un domaine d'adresse internet.

Le mot « domaine » doit être compris dans sa terminologie internet. Il représente donc un ensemble d'entités (« user agent », proxy) appartenant à une même communauté fonctionnelle.

Les terminaux Tji-k des utilisateurs Uj-k d'un sous-réseau privé ENk étant rattachés logiquement à un assistant Dj-k, ils sont donc également rattachés logiquement à l'équipement Sk comportant lesdits assistants Dj-k.

Il est important de noter qu'un terminal d'utilisateur, comme par exemple un ordinateur, peut également constituer un équipement de communication au sens de l'invention.

Chaque équipement de communication Sk comporte également un module de transfert MTk, également appelé module d'accueil et de sécurité. Les assistants Dj-k et le module de transfert MTk constituent les moyens de gestion Dj-k, MTk de l'équipement de communication Sk qui sont chargés, chaque fois qu'ils reçoivent de l'un de leurs utilisateurs Uj-k une demande d'établissement de communication avec un utilisateur appelé Uj'-k' (k' pouvant être égal à k), de constituer un message d'interrogation à destination de l'équipement Sk' associé à cet utilisateur Uj'-k', de sorte qu'il lui demande s'il accepte la communication.

Pour ce faire, les moyens de gestion Dj-k, MTk commencent par accéder à une première mémoire M1, dans laquelle se trouvent stockées des premières tables de correspondance entre des premiers identifiants d'utilisateurs Uj-k et des seconds identifiants d'utilisateurs Dj-k, de manière à déterminer le second identifiant qui correspond au premier identifiant de l'utilisateur appelé, précédemment reçu. Ces premières tables sont par exemple des répertoires personnels associés à chacun des utilisateurs, des répertoires généraux de la compagnie (dans le cas d'un réseau d'entreprise(s)), et des répertoires de correspondants usuels de la compagnie ou des utilisateurs disposant d'un répertoire personnel. Préférentiellement, chaque identifiant secondaire désigne également l'entreprise (ou un réseau public ou privé) à laquelle (ou auquel) appartient l'utilisateur associé.

La première mémoire M1 constitue préférentiellement une première partie d'une base de données d'informations Bk, dédiée aux différents répertoires précités. Cette base de données d'informations Bk est préférentiellement implantée dans le sous-réseau privé ENk et couplée à son équipement de communication Sk. Bien entendu, certains des répertoires pourraient être stockés dans une mémoire de chaque assistant. Ce pourrait notamment être le cas du répertoire personnel et des répertoires des correspondants usuels de l'utilisateur associé à l'assistant.

Un second identifiant est par exemple ce que l'on appelle couramment un identifiant personnel unique ou universel (ou UPI) ou un identifiant de communication unique ou universel (ou UCI) lié à l'utilisateur et donc à son assistant. Dans un soucis de simplification de la description on considérera dans ce qui suit qu'un second identifiant désigne un utilisateur et l'assistant associé.

Une fois en possession de l'identifiant secondaire de l'utilisateur appelé, les moyens de gestion Dj-k, MTk accèdent à une seconde mémoire M2, dans laquelle se trouve stockée une seconde table de correspondance entre des seconds identifiants d'utilisateurs Dj-k et des identifiants de communication d'équipements de communication Sk, de manière à déterminer l'identifiant de communication de l'équipement de communication Sk' auquel est rattaché l'assistant Dj'-k' désigné par le second identifiant précédemment déterminé.

Cette deuxième table de correspondance est par exemple un répertoire de la compagnie (dans le cas d'un réseau d'entreprise(s)) dans laquelle chacune des entreprises (ou des différents sites des différentes entreprises) est stockée en correspondance de son identifiant de communication (ici un domaine internet, par exemple « @ccc.alcatel.com »).

La deuxième mémoire M2 constitue préférentiellement une deuxième partie de la base de données d'information Bk, dédiée aux répertoires de la compagnie.

Ensuite, les moyens de gestion Dj-k, MTk transmettent dans le réseau internet/IP, à destination de l'équipement de communication Sk' dont l'identifiant de communication vient d'être déterminé, un message d'interrogation comportant l'identifiant de communication de leur propre équipement Sk et le second (et/ou premier) identifiant de l'utilisateur appelant Uj-k, et lui signalant que l'assistant Dj-k de l'appelant Uj-k souhaite établir une communication avec l'assistant Dj'-k' de l'appelé Uj'-k' (désigné par son second et/ou son premier identifiant).

De façon plus détaillée, lorsqu'un utilisateur appelant (par exemple U1-1) souhaite établir une communication avec un utilisateur appelé (par exemple U3-2), il transmet le premier identifiant de l'utilisateur appelé U3-2 à l'un de ses terminaux T1i-1. Cette transmission s'effectue à l'aide de l'interface homme-machine du terminal T1i-1, par exemple par commande vocale, ou par activation d'une touche dédiée ou encore par sélection dans un menu dédié. Le terminal T1i-1 est alors configuré de manière à transmettre le premier identifiant reçu à son assistant D1-1. La connexion avec l'assistant D1-1 s'effectue par une liaison de communication (à une adresse de communication prédéfinie du sous-réseau privé EN1).

L'assistant D1-1 détermine alors dans la première mémoire M1, comme indiqué ci-avant, le second identifiant de l'utilisateur appelé U3-2 associé au premier identifiant reçu (désignant l'utilisateur appelé U3-2).

Puis, l'assistant D1-1 génère une requête d'interrogation comportant le second identifiant de l'appelant (U3-2) et demandant l'établissement d'une communication avec l'assistant D3-2 désigné par le second identifiant de l'appelé précédemment déterminé. Puis, il communique cette requête au module de transfert MT1 auquel il est associé, afin qu'il détermine dans la seconde mémoire M2, comme indiqué ci-avant, l'identifiant de communication de l'équipement S2 correspondant au second identifiant de l'utilisateur appelé U3-2.

Enfin, le module de transfert MT1 transmet dans le réseau internet/IP, à destination de l'équipement de communication S2, un message d'interrogation comportant l'identifiant de communication de son propre équipement S1 et le second identifiant de l'appelant, et lui signalant que ledit assistant D1-1 de l'appelant U1-1 souhaite établir une communication avec l'assistant D3-2 de l'appelé U3-2.

Cette communication entre assistants Dj-k est destinée à déterminer si l'établissement d'une communication entre l'un des terminaux T1i-1 de l'utilisateur appelant U1-1 et l'un des terminaux T3i'-2 de l'utilisateur appelé U3-2 est susceptible de permettre aux utilisateurs appelant U1-1 et appelé U3-2 de s'échanger des données compte tenu de leurs états d'accessibilité respectifs.

Pour permettre cette détermination, chaque assistant Dj-k comporte préférentiellement une troisième mémoire M3 comportant des données d'informations sur son ou ses utilisateurs Uj-k. Ainsi, les données d'informations peuvent être représentatives d'une ou plusieurs adresses de communication (ou identifiant de communication) de terminaux associés à l'utilisateur Uj-k, et si possible représentatives de chaque adresse de communication de chaque terminal de communication associé à l'utilisateur Uj-k. Chaque adresse de terminal (numéro de téléphone, adresse électronique (ou « e-mail »), adresse URL, ou analogue) est stockée dans la troisième mémoire M3 en correspondance d'un état qui spécifie à chaque instant si ledit terminal peut être « accédé » par l'utilisateur associé Uj-k. En d'autres termes, en consultant la troisième mémoire M3 l'assistant peut savoir à chaque instant quel terminal Tji-k peut être utilisé pour joindre son utilisateur Uj-k.

Chaque troisième mémoire M3 peut également contenir de nombreuses autres données d'informations et notamment des données représentatives de l'utilisateur Uj-k, comme par exemple les noms des personnes qu'il a l'habitude d'appeler, le type de terminal qu'il préfère généralement utiliser pour échanger des données ou des informations, éventuellement en fonction de leur type, ou encore ses horaires habituels de présence au bureau, et analogues.

La troisième mémoire M3 constitue préférentiellement une troisième partie de la base de données d'information Bk, subdivisée en sous-parties associées chacune à un utilisateur Uj-k. Mais, chaque assistant pourrait comporter sa propre « troisième » mémoire stockant les données d'informations associées à son utilisateur.

Par ailleurs, la détermination de terminal peut également tenir compte d'un ou plusieurs critère(s) (ou données d'informations) fourni(s) par l'utilisateur appelant Uj-k, en même temps que sa requête d'établissement de communication, et/ou prédéfini(s) (ou programmé(s)). Parmi les critères possibles on peut notamment citer le niveau (ou degré) d'urgence de la communication, le type de la communication (données de texte, données d'image, données sonores, données multimédia, etc), le coût de la communication et la localisation de l'utilisateur appelé Uj'-k'. Par exemple, comme illustré sur l'unique figure, chaque équipement de communication Sk est couplé à un serveur de localisation SL-k de son sous-réseau privé d'appartenance ENk. Les assistants Dj-k étant associés à des utilisateurs Uj-k rattachés à une entreprise, ils peuvent par exemple être configurés de manière à systématiquement donner la priorité à une demande d'établissement de communication issue de l'appelant dont la position hiérarchique au sein de l'entreprise est la plus élevée.

Les données d'information permettent à l'assistant de l'appelant (ici D1-1) de générer des données auxiliaires qu'il intègre dans sa requête d'interrogation et qui sont transmises à l'intérieur du message d'interrogation à l'assistant de l'appelé (ici D3-2). Pour transmettre ce message d'interrogation, comme pour les autres messages échangés entre les deux équipements de communication, Sk et Sk', l'assistant met en oeuvre un protocole permettant de transmettre un texte libre, c'est à dire un protocole qui n'impose pas d'utiliser des chaînes de caractères fixées une fois pour toutes. Préférentiellement, le protocole pour échanger des informations entre les deux équipements de communication, Sk et Sk', permet en outre d'associer au texte libre contenu dans un message donné, au moins un fichier annexe d'un autre type, par exemple un fichier photo, video, son, etc. Par exemple, le protocole peut utiliser un langage de la famille de langages XML, notamment le langage HTML.

Le protocole lui-même est fonction du type de réseau reliant les deux équipements de communication, Sk et Sk' :
- Si c'est un réseau de type Internet (comme dans l'exemple représenté sur la figure),

L'équipement S2 associé à l'utilisateur appelé U3-2 reçoit dans son module de transfert MT2, du réseau internet/IP, le message d'interrogation. Le module de transfert MT2 adresse alors à l'assistant de l'appelé D3-2, désigné par le second identifiant contenu dans le message d'interrogation reçu, la demande d'établissement de communication et les éventuelles données auxiliaires qu'elle contient (« D1-1 veut communiquer avec D3-2 »).

A réception de la demande, l'assistant de l'appelé D3-2 commence préférentiellement par déterminer le premier identifiant de l'utilisateur appelé U3-2. Pour ce faire, il accède à la première table de correspondance stockée dans la première mémoire M1. Puis, il accède au serveur de localisation pour déterminer l'état d'accessibilité de l'utilisateur appelé U3-2.

Si l'utilisateur appelé U3-2 est injoignable, l'assistant D3-2 adresse à l'assistant D1-1 de l'appelant U1-1, par l'intermédiaire des modules de transfert MT2 et MT1 et du réseau internet/IP, un message signalant l'impossibilité d'établir une communication. L'assistant D1-1 est alors préférentiellement agencé de manière à signaler à l'utilisateur appelant U1-1 que l'utilisateur appelé U3-2 ne peut pas être joint.

Si l'utilisateur appelé U3-2 est joignable, mais avec un terminal qui ne satisfait pas aux critères transmis avec le message d'interrogation, l'assistant D3-2 adresse à l'assistant D1-1 de l'appelant U1-1, par l'intermédiaire des modules de transfert MT2 et MT1 et du réseau internet/IP, un message signalant l'impossibilité d'établir une communication satisfaisant aux critères demandés, mais qu'il peut malgré tout être joint sur un autre terminal satisfaisant à d'autres critères, comme par exemple en cas d'urgence ou en cas d'appel à caractère strictement privé ou strictement professionnel.

Si l'utilisateur appelé U3-2 est joignable avec au moins un terminal satisfaisant aux éventuels critères, l'assistant D3-2 sélectionne l'un de ses terminaux T3i'-2 en fonction desdites données d'informations qui lui sont associées et des éventuelles données auxiliaires qui accompagnent la demande. Cette sélection est destinée à déterminer un terminal susceptible de permettre de joindre immédiatement l'utilisateur appelé pour lui demander s'il accepte de communiquer avec l'utilisateur appelant U1-1 désigné par le second identifiant de son assistant D1-1, contenu dans le message reçu.

L'assistant de l'appelé D3-2 adresse ensuite au terminal de l'appelé (par exemple son téléphone mobile T33-2), qu'il vient de déterminer, une requête d'interrogation adaptée à son type et demandant à l'utilisateur appelé U3-1 s'il accepte l'établissement d'une communication avec l'utilisateur appelant U1-1. Cela peut se faire à l'aide d'un message vocal ou d'un message textuel, de type SMS ou équivalent. Pour permettre la transmission de ce message, chaque équipement de communication Sk peut être couplé, comme illustré sur l'unique figure, à un ou plusieurs serveurs de données SD-k, comme par exemple un serveur de voix, ou un serveur d'« e-mails », ou encore un serveur de télécopies.

Si l'utilisateur appelé U3-2 ne répond pas, l'assistant D3-2 essaye de le joindre sur un autre terminal, par exemple son téléphone fixe T32-2, s'il dispose d'un autre terminal. Si l'utilisateur appelé ne dispose pas d'un autre terminal, ou si l'utilisateur appelé ne répond pas non plus sur cet autre terminal, l'assistant D3-2 adresse à l'assistant D1-1 de l'appelant U1-1, par l'intermédiaire des modules de transfert MT2 et MT1 et du réseau internet/IP, un message signalant l'impossibilité d'établir une communication. L'assistant D1-1 est alors préférentiellement agencé de manière à signaler à l'utilisateur appelant U1-1 que l'utilisateur appelé U3-2 ne peut pas être joint.

S'il veut répondre à la requête d'interrogation, l'utilisateur appelé U3-2 utilise l'interface homme/machine de son terminal. Comme indiqué précédemment, cela peut s'effectuer par commande vocale, ou par activation d'une touche dédiée ou encore par sélection dans un menu dédié. Cette réponse peut être accompagnée de données d'informations définissant un choix, ou un critère de choix, ou une condition ; par exemple pour choisir un terminal autre que celui qui a reçu la requête d'interrogation, en fonction des préférences le l'utilisateur entre plusieurs terminaux.

Lorsque l'assistant D3-2 reçoit le message de réponse du terminal d'appelé sélectionné, il en analyse le contenu. En cas de refus d'établissement de communication, ou en cas d'absence de l'utilisateur appelé, l'assistant D3-2 adresse à l'assistant D1-1 de l'appelant U1-1, par l'intermédiaire des modules de transfert MT2 et MT1 et du réseau Internet/IP, un message signalant l'impossibilité d'établir une communication. L'assistant D1-1 est alors préférentiellement agencé de manière à signaler à l'utilisateur appelant U1-1 que l'utilisateur appelé U3-2 ne peut pas être joint.

En cas d'acceptation de la communication, y compris sous condition(s), l'assistant D3-2 de l'appelé U3-2 accède à la troisième mémoire M3 pour déterminer les terminaux de l'utilisateur appelé et les terminaux de l'utilisateur appelant qui vont pouvoir communiquer, compte tenu des données d'information qui sont associées à l'utilisateur appelé et/ou à l'utilisateur appelant, et/ou des données auxiliaires (par exemple des critères ou choix) contenues dans le message de réponse qu'il vient de recevoir de l'utilisateur appelé, et/ou contenues dans la demande d'interrogation initiale.

Selon un premier mode de mise en oeuvre, l'assistant D3-2 de l'appelé U3-2 transmet au module de transfert associé MT2 un message de réponse indiquant l'identifiant de communication d'au moins un terminal de l'utilisateur appelé U3-2 . par exemple, un numéro de téléphone fixe, un numéro de téléphone portable, une adresse Internet.

Selon un second mode de mise en oeuvre, qui est préféré, l'assistant D3-2 de l'appelé U3-2 transmet au module de transfert associé MT2 un message de réponse indiquant l'identifiant de communication d'au moins un terminal de l'utilisateur appelé U3-2 , et en outre l'indication d'un ou plusieurs mode(s) de communication possible(s) pour chaque identifiant de terminal, par exemple, voix à bande étroite, voix à large bande, visiophonie avec tel ou tel débit.

Le terminal précédemment sélectionné pour soumettre la requête d'interrogation à l'utilisateur appelé, U3-2, n'est pas forcément retenu parmi les terminaux déterminés pour la communication finale.

Le module de transfert MT2 transmet le message de réponse à l'équipement de communication S1 associé à l'utilisateur appelant, U1-1, via le réseau internet/IP.

Lorsqu'il reçoit le message de réponse à l'aide de son module de transfert MT1, l'équipement de communication S1, associé à l'utilisateur appelant U1-1, le transmet à l'assistant D1-1, désigné par le second identifiant contenu dans ledit message de réponse. L'assistant D1-1 prend connaissance de l'identifiant de communication du terminal ou des terminaux de l'utilisateur appelé, U3-2 ; et du ou des mode(s) de communication possible(s). En fonction de ces informations, et en fonction d'informations propres à l'utilisateur appelant, il fait un choix entre les différents identifiants de terminal de l'utilisateur appelé. Par exemple, si le mode de communication voix à large bande et le mode communication vidéo sont possibles, et si l'utilisateur appelant, U1-1, a indiqué qu'il préfère le mode de communication visiophonie plutôt que le mode voix, alors l'assistant choisit le mode de communication visiophonie, et donc il choisit l'identifiant de terminal associé au mode visiophonie parmi les identifiants de terminaux de l'utilisateur appelé, et il choisit l'identifiant de terminal associé au mode visiophonie parmi les identifiants de terminaux de l'utilisateur appelant.

L'assistant D1-1 initie alors l'établissement d'une communication entre les deux terminaux choisis. Préférentiellement, l'assistant D1-1 charge un tiers d'établir une communication directe entre ces terminaux. On entend ici par « tiers » le réseau de communications (PLMN, PSTN, internet, réseau privé, etc...) sélectionné pour établir directement la communication entre terminaux d'appelant et d'appelé. Pour ce faire, il extrait de sa mémoire l'identifiant de communication du terminal de l'appelant choisi, puis communique au tiers cet identifiant ainsi que celui du terminal de l'appelé, contenu dans le message de réponse reçu.

Mais, on pourrait envisager que l'un des assistants se charge d'établir la communication, ou bien que les deux assistants s'en chargent. Dans ce cas, ils s'échangent des messages de signalisation.

Un assistant Dj-k peut assurer de nombreuses autres fonctions, et notamment :
- analyser des bases de données personnelles (propres à l'utilisateur Uj-k ou à d'autres utilisateurs Uj'-k moyennant une autorisation) ou communes ;
- analyser une requête d'utilisateur appelant Uj-k à la demande de son assistant Dj-k, de manière à la traiter puis à adresser une réponse appropriée audit utilisateur Uj-k ;
- traiter des notifications (messages ou demandes de localisation de son utilisateur Uj-k) ;
- se tenir informé auprès des autres assistants Dj'-k de manière à stocker, de préférence de façon confidentielle (c'est-à-dire non accessible à l'utilisateur Uj-k), des informations relatives aux utilisateurs Uj'-k associés à ces assistants Dj'-k (comme par exemple les listes de leurs terminaux de communication, leurs habitudes en termes d'utilisation de type de terminal, ou leurs localisations habituelles respectives en fonction du jour et/ou de l'heure, et analogues) ;
- déterminer auprès des autres assistants Dj'-k les coordonnées (identifiant de communication, fonction, adresse e-mail, localisation géographique, adresse postale, etc...) d'un utilisateur que souhaite joindre son utilisateur Uj-k et qui lui sont inconnues ;
- signaler aux autres assistants Dj'-k qu'un utilisateur ne répond plus aux adresses de communication qui lui étaient associées, ou qu'un utilisateur ne possède pas d'assistant ou encore que l'assistant d'un utilisateur est localisé dans son ordinateur, ou dans son téléphone mobile, ou dans un serveur, ou dans tout autre terminal de communication, de manière à permettre une mise à jour automatique des informations de l'ensemble des assistants ;
- localiser son utilisateur Uj-k grâce à des données auxiliaires délivrées par des moyens externes, tels que des capteurs de passage et des détecteurs d'activité au niveau d'un ou plusieurs terminaux. Il est en effet possible de récupérer certaines informations de localisation, comme par exemple lors du passage sous un portique (ou dans un portillon) à l'aide d'une carte d'accès, ou grâce à un badge d'identification muni d'une interface Bluetooth, ou lors de l'ouverture ou de la fermeture d'un terminal de communication, etc, afin de déterminer l'état d'accessibilité de l'utilisateur. Ces informations de localisation sont par exemple stockées dans le serveur de localisation SL-k.

En outre, un assistant Dj-k dispose préférentiellement d'une interface homme/machine afin de pouvoir échanger des données de tout type et de toute forme (signaux électriques, données, voix, images, etc...) avec un terminal d'utilisateur interne ou externe.

De plus, un assistant Dj-k a préférentiellement accès (en lecture/écriture, transmission/réception ou activation/dé-sactivation) à tous les terminaux et/ou aux entités réelles ou virtuelles (terminaux, boîtes de messages audio et/ou vidéo, ou boîtes aux lettres électroniques (e-mail)).

Enfin, les assistants sont agencés de manière à déterminer l'état des téléphones de tout type (« à mode fonctionnel », comme par exemple les téléphones SIP, et « à mode stimuli »). Ainsi, la prise de contrôle d'un téléphone SIP par un assistant Dj-k peut s'effectuer pendant sa connexion au réseau sur une liaison de type 802.3 ou 802.11. En effet, lorsqu'un téléphone SIP se connecte au réseau, il exécute une séquence de tâches pour se faire connaître du réseau et obtenir des informations telles qu'une adresse IP, un numéro VLAN et analogues, et se trouve fonctionnellement connecté à un assistant qui devient, de ce fait, son principal correspondant. Il gère alors pour lui, avec d'autres parties, les échanges destinés à établir une communication.

D'une manière générale, il est avantageux qu'un assistant Dj-k puisse se comporter comme un « système expert » qui s'enrichit au cours du temps par apprentissage et/ou par acquisition de données d'informations dans son environnement et dans l'environnement des autres assistants avec lesquels il est relation, et/ou par intégration de nouveaux services ou nouvelles fonctionnalités. Un tel comportement peut être mis en oeuvre grâce à des techniques « expert » associées par exemple à des bases de données et des tables sémantiques affectées spécifiquement à chaque assistant.

Bien entendu, on peut également envisager que les dispositifs de traitement (ou assistants) Dj-k ne soient pas de type adaptatif.

Comme indiqué précédemment, le module de transfert MTk est préférentiellement chargé d'assurer une fonction d'accueil et une fonction de sécurité, lesquelles sont souvent liées.

La fonction d'accueil d'un module de transfert est plus précisément chargée, d'une part, de diriger les messages, provenant d'un équipement de communication externe (et notamment d'un assistant) ou d'un utilisateur externe, vers l'assistant ou l'utilisateur concerné, associé à son propre équipement de communication, et d'autre part, d'informer les correspondants externes (assistants et utilisateurs) sur ses propres assistants et utilisateurs (internes). Par exemple, en cas de demande d'information, le module de transfert MTk peut proposer une page d'accueil (ou « homepage ») offrant un choix d'actions, telles que la recherche d'un correspondant sur la base de mots clés (nom, fonction, service/division, site, etc...).

Par ailleurs, le module de transfert MTk est préférentiellement couplé aux différents serveurs de données SDk de son sous réseau privé de rattachement ENk afin de pouvoir dialoguer de façon appropriée avec n'importe quel type de terminal de communication externe. Ainsi, lorsqu'un utilisateur externe, ne disposant pas d'assistant, utilise son téléphone mobile par exemple pour établir une communication ou demander des informations, le module de transfert MTk peut établir un dialogue direct avec cet utilisateur via des systèmes de communication de type « textuel vers parole » (ou TTS pour « Text To Speech ») ou « parole vers textuel » (ou STT pour « Speech To Text »). Ces systèmes TTS et STT associés à des applications logicielles adaptées permettent ainsi d'offrir à l'utilisateur externe une fonction d'assistant qu'il ne possède pas naturellement.

La fonction de sécurité d'un module de transfert MTk est plus précisément chargée de vérifier si un correspondant externe (assistant ou utilisateur) est autorisé à établir une communication avec l'un de ses propres assistants et utilisateurs. Pour ce faire, le module de transfert MTk vérifie, au moyens d'applications logicielles adaptées, le format et la cohérence des informations reçues du réseau. Par ailleurs, cette fonction est chargée de demander des informations complémentaires à un correspondant externe quand elle l'estime nécessaire. Ces informations complémentaires font aussi l'objet d'une analyse en fonction de règles et/ou de critères de sécurité.

Le comportement de ces deux fonctions varie selon les informations reçues des correspondants externes.

On va maintenant décrire quelques exemples, non exhaustifs, d'utilisation d'assistants D au sein d'une installation du type de celle illustrée sur l'unique figure.

Chacune des situations décrites ci-après est initiée par l'utilisateur U 1-1, qui se trouve dans son bureau et qui travaille avec son ordinateur portable T11-1. C'est donc par l'intermédiaire d'un équipement couplé à cet ordinateur portable T11-1, par exemple un microphone (ou à l'aide du clavier ou de la souris), que l'utilisateur U1-1 signale qu'il souhaite accéder à son assistant D1-1, par exemple en prononçant le mot « assistant » (ou en fournissant l'adresse de communication de l'assistant).

Dans un premier exemple, l'utilisateur U1-1 demande à son assistant D1-1 de joindre l'utilisateur U2-2 afin de lui transmettre des données de type multimédia, sans que cela ne soit urgent. On suppose, dans cet exemple, que les ordinateurs portables T11-1 et T22-2 des utilisateurs U1-1 et U2-2 sont équipés pour l'échange de données multimédia. Cette requête s'effectue par exemple oralement avec la phrase « je veux une communication multimédia avec U2-2 ».

L'interface homme-machine de l'ordinateur portable T11-1 convertit cette requête en données exploitables par l'assistant D1-1, lequel établit alors une liaison avec l'assistant D2-2 de l'utilisateur U2-2 désigné, via les modules de transfert MT1 et MT2 et le réseau internet/IP, pour lui transmettre la requête, par exemple sous la forme [U 1-1, multimédia, priorité normale, seulement si U2-2 est présent dans son bureau].

A réception de cette requête, l'assistant D2-2 interroge le serveur de présence de son sous-réseau privé EN2 pour déterminer où se trouve son utilisateur U2-2 et quel terminal peut permettre de joindre U2-2. Dans cet exemple, on suppose que l'utilisateur U2-2 est dans son bureau et qu'il travaille avec son ordinateur portable T22-2 (adapté à l'échange de données multimédia).

L'assistant D2-2 peut alors, par exemple, adresser un message à l'utilisateur U2-2 (sous forme de texte ou de voix synthétisée) sur son ordinateur portable T22-2 pour l'informer de l'appel et lui demander s'il l'accepte ou non.

Dans l'hypothèse où l'utilisateur U2-2 signifie à son assistant D2-2 qu'il accepte l'appel, l'assistant D2 adresse à l'assistant D1-1, via les modules de transfert MT2 et MT1 et le réseau internet/IP, un message par exemple de type [accord, multimédia, ordinateur portable T22-2].

L'établissement de la liaison entre les ordinateurs portables T11-1 et T22-2, via le serveur d'accès proxy S2 est alors initiée par l'assistant D1-1.

Dans un deuxième exemple, l'utilisateur U1-1 demande également à son assistant D1-1 de joindre l'utilisateur U2-2 afin de lui transmettre des données de type multimédia, sans que cela ne soit urgent. On suppose, dans cet exemple, que les ordinateurs portables T11-1 et T22-2 des utilisateurs U1-1 et U2-2 sont équipés pour l'échange de données multimédia, mais seul l'ordinateur portable T11-1 est en fonctionnement (T22-2 est éteint).

L'interface homme-machine de l'ordinateur portable T11-1 convertit cette requête en données exploitables par l'assistant D1-1, lequel établit alors une liaison avec l'assistant D2-2 de l'utilisateur U2-2 désigné, via les modules de transfert MT1 et MT2 et le réseau internet/IP, pour lui transmettre la requête, par exemple sous la forme [U1-1, multimédia, priorité normale, seulement si U2-2 est présent dans son bureau].

A réception de cette requête, l'assistant D2-2 interroge le serveur de présence de son sous-réseau privé EN2 pour déterminer où se trouve son utilisateur U2-2 et quel terminal peut permettre de joindre U2-2. Dans cet exemple, on suppose que l'utilisateur U2-2 est dans son bureau et, comme indiqué ci-avant, que son ordinateur portable T22-2 est éteint. Par conséquent l'utilisateur U2-2 ne peut être joint que sur son téléphone mobile T21-2.

L'assistant D2-2 établit alors une liaison avec le téléphone mobile T21-2 afin de signaler à son utilisateur U2-2, par exemple par un message vocal synthétisé, ou un SMS (mais cela pourrait également se faire par l'envoi d'une télécopie), que l'utilisateur U1-1 souhaite établir avec lui une communication de type multimédia. Si l'utilisateur U2-2 accepte de mettre en marche son ordinateur portable T22-2, l'assistant D2-2 adresse à l'assistant D1-1 un message par exemple de type [accord, multimédia, ordinateur portable T22-2].

L'assistant D1-1 initie alors l'établissement de la liaison entre les ordinateurs portables T11-1 et T22-2.

Dans un troisième exemple, l'utilisateur U1-1 demande à son assistant D1-1 de joindre l'utilisateur U2-2, afin de lui transmettre des données de type multimédia, sans que cela ne soit urgent. On suppose, dans cet exemple, que les ordinateurs portables T11-1 et T22-2 des utilisateurs U1-1 et U2-2 sont équipés pour l'échange de données multimédia, mais seul l'ordinateur portable T11-1 est en fonctionnement (T22-2 est éteint).

L'interface homme-machine de l'ordinateur portable T11-1 convertit cette requête en données exploitables par l'assistant D1-1, lequel établit alors une liaison avec l'assistant D2-2 de l'utilisateur U2-2 désigné, via les modules de transfert MT1 et MT2 et le réseau internet/IP, pour lui transmettre la requête, par exemple sous la forme [U1-1, multimédia, priorité normale, seulement si U2-2 est présent dans son bureau].

A réception de cette requête, l'assistant D2-2 interroge le serveur de présence de son sous-réseau privé EN2 pour déterminer où se trouve son utilisateur U2-2 et quel terminal peut permettre de joindre U2-2. Dans cet exemple, on suppose que l'utilisateur U2-2 est en déplacement et qu'il ne peut être joint que sur son téléphone mobile T21-2 sous réserve que l'appel soit urgent et à caractère professionnel.

L'assistant D2-2 informe alors l'assistant D1-1 que l'utilisateur U2-2 ne peut être joint sachant que celui-ci est absent de son bureau. Les conditions de l'appelant étaient [U1-1, multimédia, priorité normale, seulement si U2-2 est présent dans son bureau].

L'assistant D1-1 en informe immédiatement l'utilisateur U1-1, par exemple par un message vocal synthétisé ou un message textuel. Puis, si l'utilisateur U1-1 indique à son assistant D1-1 que l'appel est réellement urgent et à caractère professionnel, l'assistant D1-1 initie alors une nouvelle demande de communication avec l'utilisateur U2-2.

Chaque équipement de communication Sk, et notamment ses dispositifs de traitement Dj-k et son module de traitement MTk, peuvent être réalisés sous la forme de circuits électroniques (hardware), de modules logiciels ou informatiques (software), ou d'une combinaison de circuits et de logiciels.

L'invention ne se limite pas aux modes de réalisation d'équipements de communication décrits ci-avant, seulement à titre d'exemple, mais elle englobe toutes les variantes que pourra envisager l'homme de l'art dans le cadre des revendications ci-après.

Ainsi, dans ce qui précède il a été fait référence à une installation de communications comportant un réseau privé, appartenant à une entreprise ou à un groupe d'entreprises, subdivisé en plusieurs sous-réseaux privés et couplé à un réseau de type Internet/IP et à un ou plusieurs réseaux de téléphonie. Mais, l'invention concerne d'une manière générale tous les types de réseau public ou privé interconnectés entre eux.

Par ailleurs, on a décrit une application dans laquelle les terminaux étaient des ordinateurs fixes ou portables et des téléphones fixes ou mobiles. Mais, l'invention concerne d'une manière générale toutes les machines fixes ou portables capables d'échanger des données (de type multimédia, voix, image ou texte) avec un réseau de communications (quel qu'en soit le type), y compris les télécopieurs et les assistants personnels numériques (ou PDA).

En outre, on a décrit une installation dans laquelle chaque utilisateur était associé à un dispositif de traitement (ou assistant). Mais, l'invention s'applique également au cas ou un dispositif de traitement est partagé par plusieurs utilisateurs.

De plus, on a décrit des exemples dans lesquels un utilisateur appelant tentait de joindre un unique utilisateur appelé. Mais, l'invention s'applique également aux situations dans lesquelles un utilisateur appelant tente de joindre plusieurs utilisateurs appelés. Dans ce cas, la négociation s'effectue entre les différents équipements de communication associés aux utilisateurs concernés.

Enfin, on a décrit une mise en oeuvre de l'invention dans laquelle l'utilisateur appelé était initialement désigné par un premier identifiant à partir duquel était déterminé, dans une première mémoire, un second identifiant également représentatif de l'utilisateur appelé. Mais, l'invention s'applique également aux situations dans lesquelles l'utilisateur appelé est directement désigné par un second identifiant. Dans ce cas, l'adresse de communication, de l'équipement de communication auquel sont rattachés les terminaux de l'utilisateur appelé, est directement déduite de la (seconde) mémoire. Les premier et second identifiants peuvent même être confondus. Dans ce cas, on peut ne prévoir qu'une (seconde) mémoire dans laquelle est stockée une table de correspondance entre des (premiers ou seconds) identifiants d'utilisateur et des adresses de communication d'équipements de communication. On peut également envisager une variante dans laquelle les première et seconde tables de correspondance sont fusionnées en une unique table de correspondance, les adresses de communication des équipements de communication étant alors accédées à partir de la désignation d'un premier et/ou d'un second identifiant d'utilisateur.

## Revendications

1. Procédé d'établissement de communications entre des utilisateurs dits appelant et appelé, associés chacun à au moins un identifiant personnel, et disposant chacun d'au moins un terminal de communication, chaque terminal de communication de l'utilisateur appelant étant relié logiquement à un premier équipement de communication et chaque terminal de communication de l'utilisateur appelé étant relié logiquement à un second équipement de communication, et l'ensemble de ces terminaux permettant une pluralité de modes de communication entre ces deux utilisateurs ;
ce procédé consistant, en cas de demande d'établissement d'une communication entre un utilisateur appelant et un utilisateur appelé, à échanger des informations entre le premier équipement de communication et le second équipement de communication, préalablement à l'établissement d'une communication,
et étant **caractérisé en ce que**, si l'utilisateur appelé accepte l'établissement d'une communication :
- le second équipement de communication détermine chaque terminal, de l'utilisateur appelé, qui permettraient d'établir la communication demandée;
- puis le second équipement de communication envoie au premier équipement de communication un identifiant de terminal pour chaque terminal ainsi déterminé ;
- et le premier équipement de communication sélectionne alors, parmi les identifiants qu'il reçoit, au moins un identifiant de terminal de l'utilisateur appelé, s'il y a une pluralité de choix possibles ; et initie ensuite l'établissement d'une communication entre au moins un terminal de l'utilisateur appelant, et au moins un terminal, de l'utilisateur appelé, correspondant à un identifiant qu'il a sélectionné.

2. Procédé selon la revendication 1, **caractérisé en ce que**, pour chaque terminal qu'il a déterminé, le second équipement de communication détermine en outre chaque mode de communication de ce terminal, qui permettraient d'établir la communication demandée ;
puis le second équipement de communication envoie en outre au premier équipement de communication un identifiant de mode de communication pour chaque mode ainsi déterminé ;
et le premier équipement de communication sélectionne alors, parmi les identifiants qu'il reçoit, au moins un identifiant de terminal de l'utilisateur appelé, et au moins un identifiant de mode de communication, s'il y a une pluralité de choix possibles.

3. Procédé selon la revendication 1, **caractérisé en ce que** le premier équipement de communication sélectionne au moins un identifiant de terminal de l'utilisateur appelé, en tenant compte de données d'information prédéterminées qui sont associées à l'utilisateur appelant.

4. Procédé selon la revendication 1, **caractérisé en ce que** le premier équipement de communication sélectionne au moins un identifiant de terminal de l'utilisateur appelé, en tenant compte de données d'information provenant de l'utilisateur appelant.

5. Procédé selon la revendication 1, **caractérisé en ce que** le premier équipement de communication sélectionne au moins un identifiant de terminal de l'utilisateur appelé, en tenant compte de données d'information prédéterminées qui sont associées à l'utilisateur appelé.

6. Procédé selon la revendication 1, **caractérisé en ce que** le premier équipement de communication sélectionne au moins un identifiant de terminal de l'utilisateur appelé, en tenant compte de données d'information provenant de l'utilisateur appelé.

7. Procédé selon la revendication 2, **caractérisé en ce que** le premier équipement de communication sélectionne au moins un identifiant de terminal de l'utilisateur appelé, et au moins un identifiant de mode de communication, s'il y a une pluralité de choix possibles, en tenant compte de données d'information prédéterminées qui sont associées à l'utilisateur appelant.

8. Procédé selon la revendication 2, **caractérisé en ce que** le premier équipement de communication sélectionne au moins un identifiant de terminal de l'utilisateur appelé, et au moins un identifiant de mode de communication, s'il y a une pluralité de choix possibles, en tenant compte de données d'information provenant de l'utilisateur appelant.

9. Procédé selon la revendication 2, **caractérisé en ce que** le premier équipement de communication sélectionne au moins un identifiant de terminal de l'utilisateur appelé, et au moins un identifiant de mode de communication, s'il y a une pluralité de choix possibles, en tenant compte de données d'information prédéterminées qui sont associées à l'utilisateur appelé.

10. Procédé selon la revendication 2, **caractérisé en ce que** le premier équipement de communication sélectionne au moins un identifiant de terminal de l'utilisateur appelé, et au moins un identifiant de mode de communication, s'il y a une pluralité de choix possibles, en tenant compte de données d'information provenant de l'utilisateur appelé.

11. Procédé selon la revendication 1, **caractérisé en ce que** le second équipement de communication détermine chaque terminal de l'utilisateur appelé, qui permettraient d'établir la communication demandée, en tenant compte de données d'information prédéterminées qui sont associées à l'utilisateur appelé.

12. Procédé selon la revendication 1, **caractérisé en ce que** le second équipement de communication détermine chaque terminal de l'utilisateur appelé, qui permettraient d'établir la communication demandée, en tenant compte de données d'information provenant de l'utilisateur appelé.

13. Procédé selon la revendication 1, **caractérisé en ce que** le second équipement de communication détermine chaque terminal de l'utilisateur appelé, qui permettraient d'établir la communication demandée, en tenant compte en outre de données d'information prédéterminées qui sont associées à l'utilisateur appelant.

14. Procédé selon la revendication 1, **caractérisé en ce que** le second équipement de communication détermine chaque terminal de l'utilisateur appelé, qui permettraient d'établir la communication demandée, en tenant compte en outre de données d'information provenant de l'utilisateur appelant.

15. Procédé selon la revendication 2, **caractérisé en ce que** le second équipement de communication détermine chaque terminal de l'utilisateur appelé, et chaque mode de communication de ce terminal, qui permettraient d'établir la communication demandée, en tenant compte de données d'information prédéterminées qui sont associées à l'utilisateur appelé.

16. Procédé selon la revendication 2, **caractérisé en ce que** le second équipement de communication détermine chaque terminal de l'utilisateur appelé, et chaque mode de communication de ce terminal, qui permettraient d'établir la communication demandée, en tenant compte de données d'information provenant de l'utilisateur appelé.

17. Procédé selon la revendication 2, **caractérisé en ce que** le second équipement de communication détermine chaque terminal de l'utilisateur appelé, et chaque mode de communication de ce terminal, qui permettraient d'établir la communication demandée, en tenant compte en outre de données d'information prédéterminées qui sont associées à l'utilisateur appelant.

18. Procédé selon la revendication 2, **caractérisé en ce que** le second équipement de communication détermine chaque terminal de l'utilisateur appelé, et chaque mode de communication de ce terminal, qui permettraient d'établir la communication demandée, en tenant compte en outre de données d'information provenant de l'utilisateur appelant.

19. Equipement de communication pour la gestion de l'établissement de communications entre des utilisateurs dits appelant et appelé, associés chacun à au moins un identifiant et disposant chacun d'au moins un terminal de communication; cet équipement étant rattaché logiquement à chaque terminal de communication d'au moins un utilisateur, et comportant des moyens pour échanger des informations avec un second équipement de communication analogue au premier, préalablement à l'établissement d'une communication entre un terminal rattaché logiquement à ce premier équipement et un autre terminal rattaché logiquement à ce second équipement ;
et étant **caractérisé en ce que** les moyens pour échanger des informations avec un second équipement de communication analogue au premier, comportent :
- des moyens pour recevoir un identifiant de terminal pour chaque terminal d'un utilisateur appelé, qui permettraient d'établir la communication demandée ;
- et des moyens pour sélectionner alors, parmi les identifiants qu'il reçoit, au moins un identifiant de terminal de l'utilisateur appelé, s'il y a une pluralité de choix possibles ; et initier ensuite l'établissement d'une communication entre au moins un terminal de l'utilisateur appelant, et au moins un terminal, de l'utilisateur appelé, correspondant à un identifiant sélectionné.

20. Equipement de communication selon la revendication 19, **caractérisé en ce que** les moyens pour échanger des informations avec un second équipement de communication analogue au premier, comportent en outre :
- des moyens pour recevoir au moins un identifiant de mode de communication pour chaque terminal déterminé par le second équipement de télécommunication ;
- et des moyens pour sélectionner, parmi les identifiants qu'il reçoit, au moins un identifiant de terminal de l'utilisateur appelé, et au moins un identifiant de mode de communication, s'il y a une pluralité de choix possibles.

21. Equipement de communication selon la revendication 19, **caractérisé en ce que** les moyens pour sélectionner, parmi les identifiants qu'il reçoit, au moins un identifiant de terminal de l'utilisateur appelé, comportent des moyens pour tenir compte de données d'information prédéterminées qui sont associées à l'utilisateur appelant.

22. Equipement de communication selon la revendication 19, **caractérisé en ce que** les moyens pour sélectionner, parmi les identifiants qu'il reçoit, au moins un identifiant de terminal de l'utilisateur appelé, comportent des moyens pour tenir compte de données d'information provenant de l'utilisateur appelant.

23. Equipement de communication selon la revendication 19, **caractérisé en ce que** les moyens pour sélectionner, parmi les identifiants qu'il reçoit, au moins un identifiant de terminal de l'utilisateur appelé, comportent des moyens pour tenir compte de données d'information prédéterminées qui sont associées à l'utilisateur appelé.

24. Equipement de communication selon la revendication 19, **caractérisé en ce que** les moyens pour sélectionner, parmi les identifiants qu'il reçoit, au moins un identifiant de terminal de l'utilisateur appelé, comportent des moyens pour tenir compte de données d'information provenant de l'utilisateur appelé.

25. Equipement de communication selon la revendication 20, **caractérisé en ce que** les moyens pour sélectionner, parmi les identifiants qu'il reçoit, au moins un identifiant de terminal de l'utilisateur appelé, et au moins un identifiant de mode de communication, comportent des moyens pour tenir compte de données d'information prédéterminées qui sont associées à l'utilisateur appelant.

26. Equipement de communication selon la revendication 20, **caractérisé en ce que** les moyens pour sélectionner, parmi les identifiants qu'il reçoit, au moins un identifiant de terminal de l'utilisateur appelé, et au moins un identifiant de mode de communication, comportent des moyens pour tenir compte de données d'information provenant de l'utilisateur appelant.

27. Equipement de communication selon la revendication 20, **caractérisé en ce que** les moyens pour sélectionner, parmi les identifiants qu'il reçoit, au moins un identifiant de terminal de l'utilisateur appelé, et au moins un identifiant de mode de communication, comportent des moyens pour tenir compte de données d'information prédéterminées qui sont associées à l'utilisateur appelé.

28. Equipement de communication selon la revendication 20, **caractérisé en ce que** les moyens pour sélectionner, parmi les identifiants qu'il reçoit, au moins un identifiant de terminal de l'utilisateur appelé, et au moins un identifiant de mode de communication, comportent des moyens pour tenir compte de données d'information provenant de l'utilisateur appelé.

29. Equipement de communication selon la revendication 19, **caractérisé en ce que** les moyens pour es moyens pour échanger des informations avec un second équipement de communication analogue au premier, lorsqu'un utilisateur dépendant de ce premier équipement est appelé, comportent des moyens pour déterminer chaque terminal de l'utilisateur appelé, qui permettraient d'établir la communication demandée, en tenant compte de données d'information prédéterminées qui sont associées à l'utilisateur appelé, ou de données d'information provenant de l'utilisateur appelé.

30. Equipement de communication selon la revendication 19, **caractérisé en ce que** les moyens pour es moyens pour échanger des informations avec un second équipement de communication analogue au premier, lorsqu'un utilisateur dépendant de ce premier équipement est appelé, comportent des moyens pour déterminer chaque terminal de l'utilisateur appelé, qui permettraient d'établir la communication demandée, en tenant compte de données d'information prédéterminées qui sont associées à l'utilisateur appelé.

31. Equipement de communication selon la revendication 19, **caractérisé en ce que** les moyens pour es moyens pour échanger des informations avec un second équipement de communication analogue au premier, lorsqu'un utilisateur dépendant de ce premier équipement est appelé, comportent des moyens pour déterminer chaque terminal de l'utilisateur appelé, qui permettraient d'établir la communication demandée, en tenant compte de données d'information provenant de l'utilisateur appelé.

32. Equipement de communication selon la revendication 19, **caractérisé en ce que** les moyens pour déterminer chaque terminal de l'utilisateur appelé, qui permettraient d'établir la communication demandée, comportent des moyens pour tenir compte en outre de données d'information prédéterminées qui sont associées à l'utilisateur appelant.

33. Equipement de communication selon la revendication 19, **caractérisé en ce que** les moyens pour déterminer chaque terminal de l'utilisateur appelé, qui permettraient d'établir la communication demandée, comportent des moyens pour tenir compte en outre de données d'information provenant de l'utilisateur appelant.

34. Equipement de communication selon la revendication 20, **caractérisé en ce que** les moyens pour échanger des informations avec un second équipement de communication analogue au premier, lorsqu'un utilisateur dépendant de ce premier équipement est appelé, comportent des moyens pour déterminer chaque terminal de l'utilisateur appelé, et chaque mode de communication de ce terminal, qui permettraient d'établir la communication demandée, en tenant compte de données d'information prédéterminées qui sont associées à l'utilisateur appelé.

35. Equipement de communication selon la revendication 20, **caractérisé en ce que** les moyens pour échanger des informations avec un second équipement de communication analogue au premier, lorsqu'un utilisateur dépendant de ce premier équipement est appelé, comportent des moyens pour déterminer chaque terminal de l'utilisateur appelé, et chaque mode de communication de ce terminal, qui permettraient d'établir la communication demandée, en tenant compte de données d'information provenant de l'utilisateur appelé.

## Patentansprüche

1. Verfahren zum Einrichten von Kommunikationsverbindungen zwischen Benutzern, anrufend und angerufen genannt, die jeweils mit mindestens einer persönlichen Kennung assoziiert sind und von denen jeder über mindestens ein Kommunikationsendgerät verfügt, wobei jedes Kommunikationsendgerät des anrufenden Benutzers logisch mit einer ersten Kommunikationsvorrichtung verbunden ist und wobei jedes Kommunikationsendgerät des angerufenen Benutzers logisch mit einer zweiten Kommunikationsvorrichtung verbunden ist und wobei die Gruppe besagter Endgeräte eine Vielzahl von Kommunikationsmodi zwischen besagten beiden Benutzern ermöglicht;
wobei besagtes Verfahren im Fall einer Anforderung zum Herstellen einer Kommunikation zwischen dem anrufenden Benutzer und dem angerufenen Benutzer im Austausch von Informationen zwischen der ersten Kommunikationsvorrichtung und der zweiten Kommunikationsvorrichtung vor dem Herstellen einer Kommunikation besteht,
und wobei das Verfahren **dadurch gekennzeichnet ist, dass** dann, wenn der angerufene Benutzer das Herstellen einer Kommunikation akzeptiert:
- das zweite Kommunikationsendgerät jedes Endgerät des angerufenen Benutzers bestimmt, welches das Herstellen der angeforderten Kommunikation zulässt;
- woraufhin die zweite Kommunikationsvorrichtung an die erste Kommunikationsvorrichtung eine Endgerätekennung für jedes so bestimmte Endgerät sendet;
- und wobei die erste Kommunikationsvorrichtung dann aus den erhaltenen Kennungen mindestens eine Kennung eines Endgeräts des angerufenen Benutzers auswählt, wenn mehrere Möglichkeiten zur Auswahl stehen, um daraufhin das Herstellen einer Kommunikation zwischen mindestens einem Endgerät des anrufenden Benutzers und mindestens einem Endgerät des angerufenen Benutzers einzuleiten, das einer von ihm ausgewählten Kennung entspricht.

2. Verfahren nach Anspruch 1, **dadurch gekennzeichnet, dass** die zweite Kommunikationsvorrichtung für jedes von ihm bestimmte Endgerät weiterhin jeden Kommunikationsmodus dieses Endgeräts bestimmt, der das Herstellen der angeforderten Kommunikation ermöglicht;
woraufhin die zweite Kommunikationsvorrichtung an die erste Kommunikationsvorrichtung weiterhin eine Kommunikationsmoduskennung für jeden so bestimmten Modus sendet;
und woraufhin die erste Kommunikationsvorrichtung aus den empfangenen Kennungen mindestens eine Kennung eines Endgeräts des angerufenen Benutzers sowie mindestens eine Kommunikationsmoduskennung auswählt, wenn mehrere Möglichkeiten zur Auswahl stehen.

3. Verfahren nach Anspruch 1, **dadurch gekennzeichnet, dass** die erste Kommunikationsvorrichtung mindestens eine Endgerätekennung des angerufenen Benutzers auswählt und dabei die vordefinierten Informationsdaten berücksichtigt, die mit dem anrufenden Benutzer assoziiert sind.

4. Verfahren nach Anspruch 1, **dadurch gekennzeichnet, dass** die erste Kommunikationsvorrichtung mindestens eine Endgerätekennung des angerufenen Benutzers auswählt und dabei die vordefinierten Informationsdaten berücksichtigt, die von dem anrufenden Benutzer stammen.

5. Verfahren nach Anspruch 1, **dadurch gekennzeichnet, dass** die erste Kommunikationsvorrichtung mindestens eine Endgerätekennung des angerufenen Benutzers auswählt und dabei die vordefinierten Informationsdaten berücksichtigt, die mit dem angerufenen Benutzer assoziiert sind.

6. Verfahren nach Anspruch 1, **dadurch gekennzeichnet, dass** die erste Kommunikationsvorrichtung mindestens eine Endgerätekennung des angerufenen Benutzers auswählt und dabei die vordefinierten Informationsdaten berücksichtigt, die von dem angerufenen Benutzer stammen.

7. Verfahren nach Anspruch 2, **dadurch gekennzeichnet, dass** die erste Kommunikationsvorrichtung mindestens eine Endgerätekennung des angerufenen Benutzers und mindestens eine Kommunikationsmoduskennung auswählt, wenn mehrere Möglichkeiten zur Auswahl stehen, und dabei die vordefinierten Informationsdaten berücksichtigt, die mit dem anrufenden Benutzer assoziiert sind.

8. Verfahren nach Anspruch 2, **dadurch gekennzeichnet, dass** die erste Kommunikationsvorrichtung mindestens eine Endgerätekennung des angerufenen Benutzers und mindestens eine Kommunikationsmoduskennung auswählt, wenn mehrere Möglichkeiten zur Auswahl stehen, und dabei die Informationsdaten berücksichtigt, die vom anrufenden Benutzer stammen.

9. Verfahren nach Anspruch 2, **dadurch gekennzeichnet, dass** die erste Kommunikationsvorrichtung mindestens eine Endgerätekennung des angerufenen Benutzers und mindestens eine Kommunikationsmoduskennung auswählt, wenn mehrere Möglichkeiten zur Auswahl stehen, und dabei die vordefinierten Informationsdaten berücksichtigt, die mit dem angerufenen Benutzer assoziiert sind.

10. Verfahren nach Anspruch 2, **dadurch gekennzeichnet, dass** die erste Kommunikationsvorrichtung mindestens eine Endgerätekennung des angerufenen Benutzers und mindestens eine Kommunikationsmoduskennung auswählt, wenn mehrere Möglichkeiten zur Auswahl stehen, und dabei die Informationsdaten berücksichtigt, die vom angerufenen Benutzer stammen.

11. Verfahren nach Anspruch 1, **dadurch gekennzeichnet, dass** die zweite Kommunikationsvorrichtung alle Endgeräte des angerufenen Benutzers bestimmt, die das Herstellen der angeforderten Kommunikation zulassen, und dabei die vordefinierten Informationsdaten berücksichtigt, die mit dem angerufenen Benutzer assoziiert sind.

12. Verfahren nach Anspruch 1, **dadurch gekennzeichnet, dass** die zweite Kommunikationsvorrichtung alle Endgeräte des angerufenen Benutzers bestimmt, die das Herstellen der angeforderten Kommunikation zulassen, und dabei die Informationsdaten berücksichtigt, die von dem angerufenen Benutzer stammen.

13. Verfahren nach Anspruch 1, **dadurch gekennzeichnet, dass** die zweite Kommunikationsvorrichtung alle Endgeräte des angerufenen Benutzers bestimmt, die das Herstellen der angeforderten Kommunikation zulassen, und dabei weiterhin die vordefinierten Informationsdaten berücksichtigt, die mit dem anrufenden Benutzer assoziiert sind.

14. Verfahren nach Anspruch 1, **dadurch gekennzeichnet, dass** die zweite Kommunikationsvorrichtung alle Endgeräte des angerufenen Benutzers bestimmt, die das Herstellen der angeforderten Kommunikation zulassen, und dabei weiterhin die Informationsdaten berücksichtigt, die von dem anrufenden Benutzer stammen.

15. Verfahren nach Anspruch 2, **dadurch gekennzeichnet, dass** die zweite Kommunikationsvorrichtung alle Endgeräte des angerufenen Benutzers und alle Kommunikationsmodi von dessen Endgeräten bestimmt, die das Herstellen der angeforderten Kommunikation zulassen, und dabei die vordefinierten Informationsdaten berücksichtigt, die mit dem angerufenen Benutzer assoziiert sind.

16. Verfahren nach Anspruch 2, **dadurch gekennzeichnet, dass** die zweite Kommunikationsvorrichtung alle Endgeräte des angerufenen Benutzers und alle Kommunikationsmodi von dessen Endgeräten bestimmt, die das Herstellen der angeforderten Kommunikation zulassen, und dabei die Informationsdaten berücksichtigt, die von dem angerufenen Benutzer stammen.

17. Verfahren nach Anspruch 2, **dadurch gekennzeichnet, dass** die zweite Kommunikationsvorrichtung alle Endgeräte des angerufenen Benutzers und alle Kommunikationsmodi von dessen Endgeräten bestimmt, die das Herstellen der angeforderten Kommunikation zulassen, und dabei weiterhin die vordefinierten Informationsdaten berücksichtigt, die mit dem anrufenden Benutzer assoziiert sind.

18. Verfahren nach Anspruch 2, **dadurch gekennzeichnet, dass** die zweite Kommunikationsvorrichtung alle Endgeräte des angerufenen Benutzers und alle Kommunikationsmodi von dessen Endgeräten bestimmt, die das Herstellen der angeforderten Kommunikation zulassen, und dabei weiterhin die Informationsdaten berücksichtigt, die von dem anrufenden Benutzer stammen.

19. Kommunikationsvorrichtung zur Abwicklung des Herstellens von Kommunikationen zwischen Benutzern, anrufend und angerufen genannt, die jeweils mit mindestens einer Kennung assoziiert sind und von denen jeder über mindestens ein Kommunikationsendgerät verfügt; wobei besagt Vorrichtung logisch mit jedem Kommunikationsendgerät mindestens eines Benutzers verbunden ist und Mittel zum Austausch von Informationen mit einer zweiten Kommunikationsvorrichtung umfasst, die analog zur ersten ist, was vor dem Herstellen einer Kommunikation zwischen einem Endgerät, das logisch mit besagter erster Vorrichtung verbunden ist, und einem weiteren Endgerät, das logisch mit besagter zweiter Vorrichtung verbunden ist, erfolgt; **dadurch gekennzeichnet, dass** die Mittel zum Austausch von Informationen mit einer zweiten Kommunikationsvorrichtung, die analog zur ersten ist, Folgendes umfassen:
- Mittel für den Empfang einer Endgerätekennung für jedes Endgerät eines angerufenen Benutzers, welches das Herstellen der angeforderten Kommunikation zulässt;
- und Mittel, um im Anschluss aus den erhaltenen Kennungen mindestens eine Kennung eines Endgeräts des angerufenen Benutzers auszuwählen, wenn mehrere Möglichkeiten zur Auswahl stehen, um daraufhin das Herstellen einer Kommunikation zwischen mindestens einem Endgerät des anrufenden Benutzers und mindestens einem Endgerät des angerufenen Benutzers einzuleiten, das einer ausgewählten Kennung entspricht.

20. Kommunikationsvorrichtung nach Anspruch 19, **dadurch gekennzeichnet, dass** die Mittel zum Austausch von Informationen mit einer zweiten Kommunikationsvorrichtung, die analog zur ersten ist, unter anderem Folgendes umfassen:
- Mittel für den Empfang mindestens einer Kommunikationsmoduskennung für jedes von der zweiten Telekommunikationsvorrichtung bestimmte Endgerät;
- und Mittel, um aus den empfangenen Kennungen mindestens eine Kennung eines Endgeräts des angerufenen Benutzers sowie mindestens eine Kommunikationsmoduskennung auszuwählen, wenn mehrere Möglichkeiten zur Auswahl stehen.

21. Kommunikationsvorrichtung nach Anspruch 19, **dadurch gekennzeichnet, dass** die Mittel zur Auswahl mindestens einer Endgerätekennung des angerufenen Benutzers aus den empfangenen Kennungen Mittel umfassen, um die vordefinierten Informationsdaten zu berücksichtigen, die mit dem anrufenden Benutzer assoziiert sind.

22. Kommunikationsvorrichtung nach Anspruch 19, **dadurch gekennzeichnet, dass** die Mittel zur Auswahl mindestens einer Endgerätekennung des angerufenen Benutzers aus den empfangenen Kennungen Mittel umfassen, um die Informationsdaten zu berücksichtigen, die von dem anrufenden Benutzer stammen.

23. Kommunikationsvorrichtung nach Anspruch 19, **dadurch gekennzeichnet, dass** die Mittel zur Auswahl mindestens einer Endgerätekennung des angerufenen Benutzers aus den empfangenen Kennungen Mittel umfassen, um die vordefinierten Informationsdaten zu berücksichtigen, die mit dem angerufenen Benutzer assoziiert sind.

24. Kommunikationsvorrichtung nach Anspruch 19, **dadurch gekennzeichnet, dass** die Mittel zur Auswahl mindestens einer Endgerätekennung des angerufenen Benutzers aus den empfangenen Kennungen Mittel umfassen, um die Informationsdaten zu berücksichtigen, die von dem angerufenen Benutzer stammen.

25. Kommunikationsvorrichtung nach Anspruch 20, **dadurch gekennzeichnet, dass** die Mittel zur Auswahl mindestens einer Endgerätekennung des angerufenen Benutzers aus den empfangenen Kennungen und mindestens einer Kommunikationsmoduskennung Mittel umfassen, um die vordefinierten Informationsdaten zu berücksichtigen, die mit dem anrufenden Benutzer assoziiert sind.

26. Kommunikationsvorrichtung nach Anspruch 20, **dadurch gekennzeichnet, dass** die Mittel zur Auswahl mindestens einer Endgerätekennung des angerufenen Benutzers aus den empfangenen Kennungen und mindestens einer Kommunikationsmoduskennung Mittel umfassen, um die Informationsdaten zu berücksichtigen, die von dem anrufenden Benutzer stammen.

27. Kommunikationsvorrichtung nach Anspruch 20, **dadurch gekennzeichnet, dass** die Mittel zur Auswahl mindestens einer Endgerätekennung des angerufenen Benutzers aus den empfangenen Kennungen und mindestens einer Kommunikationsmoduskennung Mittel umfassen, um die vordefinierten Informationsdaten zu berücksichtigen, die mit dem angerufenen Benutzer assoziiert sind.

28. Kommunikationsvorrichtung nach Anspruch 20, **dadurch gekennzeichnet, dass** die Mittel zur Auswahl mindestens einer Endgerätekennung des angerufenen Benutzers aus den empfangenen Kennungen und mindestens einer Kommunikationsmoduskennung Mittel umfassen, um die Informationsdaten zu berücksichtigen, die von dem angerufenen Benutzer stammen.

29. Kommunikationsvorrichtung nach Anspruch 19, **dadurch gekennzeichnet, dass** die Mittel für den Austausch von Informationen mit einer zweiten Kommunikationsvorrichtung, die analog zur ersten ist, dann, wenn ein von besagter erster Vorrichtung abhängender Benutzer angerufen wird, Mittel umfassen, um jedes Endgerät des angerufenen Benutzers zu bestimmen, das die Herstellung der angeforderten Kommunikation zulässt, dabei die vordefinierten Informationsdaten berücksichtigend, die mit dem anrufenden Benutzer assoziiert sind, oder die Informationsdaten, die von dem angerufenen Benutzer stammen.

30. Kommunikationsvorrichtung nach Anspruch 19, **dadurch gekennzeichnet, dass** die Mittel für den Austausch von Informationen mit einer zweiten Kommunikationsvorrichtung, die analog zur ersten ist, dann, wenn ein von besagter erster Vorrichtung abhängender Benutzer angerufen wird, Mittel umfassen, um jedes Endgerät des angerufenen Benutzers zu bestimmen, das die Herstellung der angeforderten Kommunikation zulässt, dabei die vordefinierten Informationsdaten berücksichtigend, die mit dem angerufenen Benutzer assoziiert sind.

31. Kommunikationsvorrichtung nach Anspruch 19, **dadurch gekennzeichnet, dass** die Mittel für den Austausch von Informationen mit einer zweiten Kommunikationsvorrichtung, die analog zur ersten ist, dann, wenn ein von besagter erster Vorrichtung abhängender Benutzer angerufen wird, Mittel umfassen, um jedes Endgerät des angerufenen Benutzers zu bestimmen, das die Herstellung der angeforderten Kommunikation zulässt, dabei die Informationsdaten berücksichtigend, die von dem angerufenen Benutzer stammen.

32. Kommunikationsvorrichtung nach Anspruch 19, **dadurch gekennzeichnet, dass** die Mittel für das Bestimmen aller Endgeräte des angerufenen Benutzers, die das Herstellen der angeforderten Kommunikation zulassen, Mittel umfassen, um weiterhin die vordefinierten Informationsdaten zu berücksichtigen, die mit dem anrufenden Benutzer assoziiert sind.

33. Kommunikationsvorrichtung nach Anspruch 19, **dadurch gekennzeichnet, dass** die Mittel für das Bestimmen aller Endgeräte des angerufenen Benutzers, die das Herstellen der angeforderten Kommunikation zulassen, Mittel umfassen, um weiterhin die Informationsdaten zu berücksichtigen, die von dem anrufenden Benutzer stammen.

34. Kommunikationsvorrichtung nach Anspruch 20, **dadurch gekennzeichnet, dass** die Mittel für den Austausch von Informationen mit einer zweiten Kommunikationsvorrichtung, die analog zur ersten ist, dann, wenn ein von besagter erster Vorrichtung abhängender Benutzer angerufen wird, Mittel umfassen, um alle Endgeräte des angerufenen Benutzers und alle Kommunikationsmodi dieser Endgeräte zu bestimmen, welche die Herstellung der angeforderten Kommunikation zulassen, dabei die vordefinierten Informationsdaten berücksichtigend, die mit dem angerufenen Benutzer assoziiert sind.

35. Kommunikationsvorrichtung nach Anspruch 20, **dadurch gekennzeichnet, dass** die Mittel für den Austausch von Informationen mit einer zweiten Kommunikationsvorrichtung, die analog zur ersten ist, dann, wenn ein von besagter erster Vorrichtung abhängender Benutzer angerufen wird, Mittel umfassen, um alle Endgeräte des angerufenen Benutzers und alle Kommunikationsmodi dieser Endgeräte zu bestimmen, welche die Herstellung der angeforderten Kommunikation zulassen, dabei die Informationsdaten berücksichtigend, die von dem angerufenen Benutzer stammen.

## Claims

1. A method for establishing communications between called and calling users, each associated with at least one personal identifier, and each having at least one communication terminal, each communication terminal of the calling user being logically linked to a first communication device, and each communication terminal of the called user being logically linked to a second communication device, and all of those terminals enabling a plurality of communication modes between those two users;
said method consisting, in the event of a request to establish communication between a calling user and a called user, of exchanging information between the first communication device and the second communication device, prior to the establishment of a communication,
and being **characterized in that**, if the called user accepts the establishment of a communication:
- the second communication device determines each terminal, of the called user, that would enable the establishment of the requested communication;
- next, the second communication device sends to the first communication device a terminal identifier for each terminal determined in this way;
- and the first communication device then selects, from among the identifiers that it receives, at least one terminal identifier of the called user, if there is a plurality of potential choices; and then initiates the establishing of a communication between at least one terminal of the calling user, and at least one terminal, of the called user, corresponding to an identifier that it has selected.

2. A method according to claim 1, **characterized in that**, for each terminal that it has determined, the second communication device further determines each communication mode of that terminal, which would enable the establishment of the requested communication;
next, the second communication device further sends the first communication device a communication mode identifier for each mode thereby determined;
and the first communication device then selects, from among the identifiers that it receives, at least one terminal identifier of the called user, and at least one communication mode identifier, if there is a plurality of potential choices.

3. A method according to claim 1, **characterized in that** the first communication device selects at least one terminal identifier of the called user, taking into account predetermined information data that is associated with the calling user.

4. A method according to claim 1, **characterized in that** the first communication device selects at least one terminal identifier of the called user, taking into account information data that came from the calling user.

5. A method according to claim 1, **characterized in that** the first communication device selects at least one terminal identifier of the called user, taking into account predetermined information data that is associated with the called user.

6. A method according to claim 1, **characterized in that** the first communication device selects at least one terminal identifier of the called user, taking into account information data that came from the called user.

7. A method according to claim 2, **characterized in that** the first communication device selects at least one terminal identifier of the called user, and at least one communication mode identifier, if there is a plurality of potential choices, taking into account predetermined information data that is associated with the calling user.

8. A method according to claim 2, **characterized in that** the first communication device selects at least one terminal identifier of the called user, and at least one communication mode identifier, if there is a plurality of potential choices, taking into account information data that came from the calling user.

9. A method according to claim 2, **characterized in that** the first communication device selects at least one terminal identifier of the called user, and at least one communication mode identifier, if there is a plurality of potential choices, taking into account predetermined information data that is associated with the called user.

10. A method according to claim 2, **characterized in that** the first communication device selects at least one terminal identifier of the called user, and at least one communication mode identifier, if there is a plurality of potential choices, taking into account information data that came from the called user.

11. A method according to claim 1, **characterized in that** the second communication determines each terminal of the called user, which would enable the establishment of the requested communication, taking into account predetermined information data that is associated with the called user.

12. A method according to claim 1, **characterized in that** the second communication determines each terminal of the called user, which would enable the establishment of the requested communication, taking into account information data that came from the called user.

13. A method according to claim 1, **characterized in that** the second communication determines each terminal of the called user, which would enable the establishment of the requested communication, further taking into account predetermined information data that is associated with the calling user.

14. A method according to claim 1, **characterized in that** the second communication device determines each terminal of the called user, which would enable the establishment of the requested communication, further taking into account information data that came from the calling user.

15. A method according to claim 2, **characterized in that** the second communication device determines each terminal of the called user, and each communication mode of that terminal, which would enable the establishment of the requested communication, taking into account predetermined information data that is associated with the called user.

16. A method according to claim 2, **characterized in that** the second communication device determines each terminal of the called user, and each communication mode of that terminal, which would enable the establishment of the requested communication, taking into account information data that came from the called user.

17. A method according to claim 2, **characterized in that** the second communication device determines each terminal of the called user, and each communication mode of that terminal, which would enable the establishment of the requested communication, further taking into account predetermined information data that is associated with the calling user.

18. A method according to claim 2, **characterized in that** the second communication device determines each terminal of the called user, and each communication mode of that terminal, which would enable the establishment of the requested communication, further taking into account information data that came from the calling user.

19. A communication device for managing the establishment of communications between called and calling users, each associated with at least one identifier, and each having at least one communication terminal; that device being logically assigned to each communication terminal of at least one user, and comprising means for exchanging information with a second communication device analogous to the first, prior to the establishment of a communication between a terminal logically assigned to that first device and another terminal logically assigned to that second device;
and being **characterized in that** the means for exchanging information with a second communication device analogous to the first, comprise:
- means for receiving a terminal identifier for each terminal of a called user, that would enable the establishment of the requested communication;
- and means for then selecting, from among the identifiers that it receives, at least one terminal identifier of the called user, if there is a plurality of potential choices; and then initiates the establishing of a communication between at least one terminal of the calling user, and at least one terminal, of the called user, corresponding to a selected identifier.

20. A communication device according to claim 19, **characterized in that** the means for exchanging information with a second communication device analogous to the first, further comprise:
- means for receiving at least one communication mode identifier for each terminal determined by the second telecommunication device;
- and means for selecting, from among the identifiers that it receives, at least one terminal identifier of the called user, and at least one communication mode identifier, if there is a plurality of potential choices.

21. A communication device according to claim 19, **characterized in that** the means for selecting, from among the identifiers that it receives, at least one terminal identifier of the called user, comprise means for taking into account predetermined information data that is associated with the calling user.

22. A communication device according to claim 19, **characterized in that** the means for selecting, from among the identifiers that it receives, at least one terminal identifier of the called user, comprise means for taking into account information data that came from the calling user.

23. A communication device according to claim 19, **characterized in that** the means for selecting, from among the identifiers that it receives, at least one terminal identifier of the called user, comprise means for taking into account predetermined information data that is associated with the called user.

24. A communication device according to claim 19, **characterized in that** the means for selecting, from among the identifiers that it receives, at least one terminal identifier of the called user, comprise means for taking into account information data that came from the called user.

25. A communication device according to claim 20, **characterized in that** the means for selecting, from among the identifiers that it receives, at least one terminal identifier of the called user, and at least one communication mode identifier, comprise means for taking into account predetermined information data that is associated with the calling user.

26. A communication device according to claim 20, **characterized in that** the means for selecting, from among the identifiers that it receives, at least one terminal identifier of the called user, and at least one communication mode identifier, comprise means for taking into account information data that came from the calling user.

27. A communication device according to claim 20, **characterized in that** the means for selecting, from among the identifiers that it receives, at least one terminal identifier of the called user, and at least one communication mode identifier, comprise means for taking into account predetermined information data that is associated with the called user.

28. A communication device according to claim 20, **characterized in that** the means for selecting, from among the identifiers that it receives, at least one terminal identifier of the called user, and at least one communication mode identifier, comprise means for taking into account information data that came from the called user.

29. A communication device according to claim 19, **characterized in that** the means for exchanging information with a second communication device analogous to the first, when a user depending on that first device is called, comprise means for determining each terminal of the called user, which would enable the establishment of the requested communication, taking into account predetermined information data that is associated with the called user, or information data that came from the called user.

30. A communication device according to claim 19, **characterized in that** the means for exchanging information with a second communication device analogous to the first, when a user depending on that first device is called, comprise means for determining each terminal of the called user, which would enable the establishment of the requested communication, taking into account predetermined information data that is associated with the called user.

31. A communication device according to claim 19, **characterized in that** the means for exchanging information with a second communication device analogous to the first, when a user depending on that first device is called, comprise means for determining each terminal of the called user, which would enable the establishment of the requested communication, taking into account information data that that came from the called user.

32. A communication device according to claim 19, **characterized in that** the means for determining each terminal of the called user, which would enable the establishment of the requested communication, comprise means for additionally taking into account predetermined information data that is associated with the calling user.

33. A communication device according to claim 20, **characterized in that** the means for exchanging information with a second communication device analogous to the first, when a user depending on that first device is called, comprise means for additionally taking into account information data that that came from the called user.

34. A communication device according to claim 20, **characterized in that** the means for exchanging information with a second communication device analogous to the first, when a user depending on that first device is called, comprise means for determining each terminal of the called user, and each communication mode of that terminal, which would enable the establishment of the requested communication, taking into account predetermined information data that is associated with the called user.

35. A communication device according to claim 20, **characterized in that** the means for exchanging information with a second communication device analogous to the first, when a user depending on that first device is called, comprise means for determining each terminal of the called user, and each communication mode of that terminal, which would enable the establishment of the requested communication, taking into account information data that that came from the called user.
